# EUROPÄISCHE PATENTSCHRIFT

(11) **EP 0 571 802 B1**
(45) Veröffentlichungstag und Bekanntmachung des Hinweises auf die Patenterteilung: **18.09.1996**
(21) Anmeldenummer: 93107605.3
(22) Anmeldetag: 11.05.1993
(51) Int. Cl.: B60C 9/18, B60C 9/20

(54) **Reifen für Fahrzeuge**
Vehicle tyre
Pneumatique pour véhicules

(30) Priorität: 26.05.1992 CH 1697/92
(43) Veröffentlichungstag der Anmeldung: 01.12.1993
(73) Patentinhaber: Ludwig, Dieter, CH-4460 Gelterkinden (CH)
(72) Erfinder: Ludwig, Dieter, CH-4460 Gelterkinden (CH)
(74) Vertreter: Hudler, Frank

(56) Entgegenhaltungen:
- DE-A- 1 680 489
- DE-A- 2 821 041
- FR-A- 1 401 368
- FR-A- 1 433 298
- FR-A- 2 130 765
- US-A- 4 165 403

## Beschreibung

Die Erfindung betrifft einen Reifen für Fahrzeuge, mit einem Körper aus einem elastischen Material, vorzugsweise aus Kautschuk oder kautschukartigen Material, einem gewölbten Unterbau und einer außenseitigen Lauffläche, wobei unter der Lauffläche ein sich ringförmiger in Umfangrichtung erstreckender mehrlagiger Gürtel mit das elastische Material verstärkenden und stabilisierenden Fertigkeitselementen im elastischen Material eingebettet sind.

Bekanntlich werden heute für Fahrzeuge vorwiegend sogenannte Gürtelreifen verwendet, die in herkömmlicher Bauweise eine Karkasse mit radial, das heißt senkrecht zum Reifenumfang, verlaufenden Cordfäden und einen zwischen Karkasse und Lauffläche angeordneten Gürtel mit mehreren, meist kreuzweise angeordneten, Lagen Cordgewerbe aufweisen.

Eine Hauptanforderung an den Reifenbau ist das gleichzeitige Erreichen von sowohl genügender Quer- wie auch Längsstabilität des Reifens in geeignetem Verhältnis, weil diese Faktoren die fahrdynamischen Qualitäten entscheidend bestimmen. Die bekannten Gürtelreifen erfüllen diese Anforderung in hohem Maße.

Heute treten jedoch neben den Anforderungen an ein möglichst optimales Fahrverhalten vermehrt die Kriterien sparsame Verwendung von Energie und Ressourcen sowohl bei der Herstellung, wie auch bei der Verwendung in den Vordergrund. Nebst Luftwiderstand und Gewicht des gesamten Fahrzeugs beeinflussen die Eigenschaften der Reifen, wie Gewicht, innere Arbeit, Rollwiderstand usw., den Energieverbrauch eines Fahrzeugs entscheidend. Außerdem ist eine Materialersparnis im Aufbau von Reifen nicht nur bei der Herstellung kostengünstiger und umweltfreundlicher, sondern auch bei der nicht unproblematischen Entsorgung.

In bezug auf die oben genannten Kriterien weist der herkömmliche Gürtelreifen gewichtige Nachteile auf. Die mehrlagigen Cordgewebe des Gürtels bilden zusammen mit ihrer Kautschukbeziehungsweise Gummiummantelung eine vergleichsweise dicke Schicht, die an sich schon unerwünscht viel Material benötigt. Überdies weist eine derartige Gürtelkonstruktion eine im Grunde ungenügende Steifigkeit in radialer Richtung auf, die die gleichmäßige Abplattung und spezifische Belastung des Reifens in der Bodenaufstandsfläche behindert. Dieser Schwierigkeit wird bekanntlich dadurch begegnet, daß die Gürtelreifen entsprechend breiter gebaut werden, was dazu führt, daß diese Reifen noch mehr Material benötigen, schwerer werden und erhöhte Werte von Luftwiderstand, innerer Arbeit und Rollwiderstand erhalten.

Aus der EP-A-0 264 539 ist ein Gürtelreifen für Fahrzeuge bekannt geworden, bei dem der Gürtel aus zwei Gürtellagen zusammengesetzt ist. Eine der Gürtellagen, die als Ferigkeitsträger dient, ist als Längsgürtel oder Umfangsgürtellage ausgebildet, die aus Ringen oder Bändern besteht, die im gegenseitigen Abstand nebeneinander angeordnet sind. Diese Ringe oder Bänder können textile Corde, synthetische Fäden oder auch Metalldrähte sein. Die zweite Gürtellage ist als Querträger ausgebildet, der aus einer sich über die Breite des Umfangsgürtels erstreckenden und in Umfangsrichtung des Luftreifens verlaufenden Kunststoffolie besteht. Die Kunststoffolie verläuft parallel zu den Fertigkeitsträgern des Umfangsgürtels und ist quer zu demselben gewellt. Die Folie kann auch in mehrere parallel zueinander verlaufende, entsprechend gewellte Bänder unterteilt sein. Ein solcher Gürtelreifen ist jedoch fertigungstechnisch sehr aufwendig, da einerseits Sorge dafür getragen werden muß, daß die Festigkeitsträger parallel zueinander angeordnet werden und daß die Elemente des Quergürtels zu diesen Festigkeitsträgern exakt ausgerichtet werden müssen. Darüberhinaus ist eine solche Reifenkonstruktion sehr verhältnismäßig materialaufwendig.

Es ist daher eine Aufgabe der vorliegenden Erfindung, einen Reifen mit energie- und materialsparendem Aufbau zu schaffen, der gleichzeitig die für ein optimales Fahrverhalten benötigte Längs- und Querstabilität aufweist und mit dem unterschiedlichen Parameter, wie Komfort, Rollwiderstand und Hochgeschwindigkeitsverhalten beeinflußt werden können.

Die der Erfindung zugrundeliegende Aufgabenstellung wird bei einem Reifen für Fahrzeuge der eingangs genannten Art dadurch gelöst, daß die Gürtellagen Folien oder Bleche sind, deren Steifigkeit in einer bevorzugten Richtung schräg zur Umfangsrichtung einen höchsten Wert besitzt und daß die Folien oder Bleche in der jeweiligen Gürtellage derart angeorndet sind, daß die bevorzugte Richtung in der einen dieser Gürtellagen an der Reifenmittelebene gespiegelt zur bevorzugten Richtung in der anderen dieser Gürtellagen verläuft.

Bevorzugte Ausführungsbeispiele und ein Verfahren zur Herstellung eines solchen Reifens für Fahrzeuge gehen aus den abhängigen Patentansprüchen hervor.

Durch die Verwendung von verstärkenden und stabilisierenden Festigkeitselementen in Form von Folien oder Blechen mit richtungsabhängigen mechanischen Eigenschaften, die in einer bevorzugten Richtung eine erhöhte Steifigkeit aufweisen, wird mit vergleichsweise wenig Material eine hohe Querstabilität erreicht. Entscheidend dabei ist die Ausrichtung der bevorzugten Richtung schräg zur Umfangsrichtung des Reifens, denn dadurch wird zusätzlich zur Querstabilität auch die erforderliche Längsstabilität erzielt. Weitere Gürtellagen zur Verbesserung der Längsstabilität werden somit im allgemeinen überflüssig. Versuche haben gezeigt, daß derart aufgebaute Reifen in radialer Richtung trotzdem genügend flexibel sind, um die gleichmäßige Abplattung im Bodenberührungsbereich zu erlauben. Damit können Reifen gebaut werden, die ausgezeichnete Rollwiderstandswerte haben und trotzdem schmaler und leichter sind, als Reifen nach dem Stand der Technik.

Die richtungsabhängige Steifigkeit der Folien oder Bleche kann in verschiedener Weise realisiert werden. Besonders zweckmäßig sind Ausführungsformen, bei welchen die richtungsabhängige Steifigkeit durch eine Wellung oder Sickung der Folien oder Bleche erzielt ist. Jedoch hat sich herausgestellt, daß es insbesondere für Reifen, die für niedrigere Fahrbelastungen optimiert sind, auch schon ausreicht, wenn der Werkstoff der Folien oder Bleche eine entsprechende strukturelle Anisotropie beziehungsweise Textur aufweist. Eine derartige Anisotropie ergibt sich etwa bei Kunststoffolien wie zum Beispiel Polyamid herstellungsbedingt durch die Längsorientierung der Polyamidmolekülketten während der Vorstreckung in einem Kalander und bei Metallblechen durch die bei vielen Fertigungsverfahren, beispielsweise beim Walzen, entstehende sogenannte Textur.

Durch Verändern des Winkels zwischen der bevorzugten Richtung, in der die Steifigkeit der Folien oder Bleche ihren höchsten Wert hat, und der Umfangsrichtung lassen sich zudem unterschiedliche Parameter eines erfindungsgemäßen Reifens, wie Komfort, Rollwiderstand oder Hochgeschwindigkeitsverhalten unterschiedlich beeinflussen. Spitzere Winkel führen zum Beispiel zu größerer Längsstabilität, so daß der Rollwiderstand weiter verkleinert wird und ein sogenannter Rollwulst in Laufrichtung weitgehend vermieden werden kann.

Je nach Verwendungszweck eines Reifens, beispielsweise je nach Geschwindigkeitsbereich oder Fahrzeuggewicht, kann die Anzahl der Gürtellagen und ihre Ausgestaltung entsprechend gewählt werden. Vorzugsweise werden zwei Gürtellagen mit Folien oder Blechen verwendet, deren jeweilige bevorzugte Richtung mit höchster Steifigkeit in bezug auf die Reifenmittelebene entgegengesetzt (gespiegelt) verläuft, da auf diese Weise am einfachsten symmetrische Laufeigenschaften gewährleistet sind. Die Gürtellagen können auch unterschiedlich breit sein, oder so versetzt, daß sie nur teilweise übereinanderliegen, womit sich zum Beispiel Gürtel erzielen lassen, die in den Randbereichen flexibler sind, als im Mittelbereich.

Als zusätzlicher Vorteil bei Ausführungsformen mit gewellten oder gesickten Festigkeitselementen erweist sich der Umstand, daß die Bindung zwischen den Folien oder Blechen und dem elastischen Reifenmaterial durch die Wellung oder Sickung verbessert wird.

Im folgenden wird die Erfindung anhand einiger Ausführungsbeispiele und unter Bezugnahme auf die beiliegenden Zeichnungen näher erläutert. Es zeigt
- Fig. 1: einen aufgeschnittenen Reifen in vereinfachter Darstellung,
- Fig. 2: einen vergrößerten Ausschnitt aus Fig. 1,
- Fig. 3: in schematischer Perspektivdarstellung eine mögliche Anordnung zweier übereinanderliegender Gürtellagen mit gewellten Festigkeitselementen,
- Fig. 4: dieselbe Anordnung zweier Gürtellagen mit Festigkeitselementen wie in Fig. 3, jedoch als Draufsicht,
- Fig. 5: eine Draufsicht auf eine weitere, mögliche Anordnung zweier Gürtellagen mit gewellten Festigkeitselementen,
- Fig. 6: eine Draufsicht auf eine Gürtellage mit Festigkeitselementen, die aus mehreren lamellenförmigen Teilen bestehen, und
- Fig. 7: eine schematische Darstellung eines Verfahrens zur Herstellung einer Gürtellage mit gewellten Festigkeitselementen.

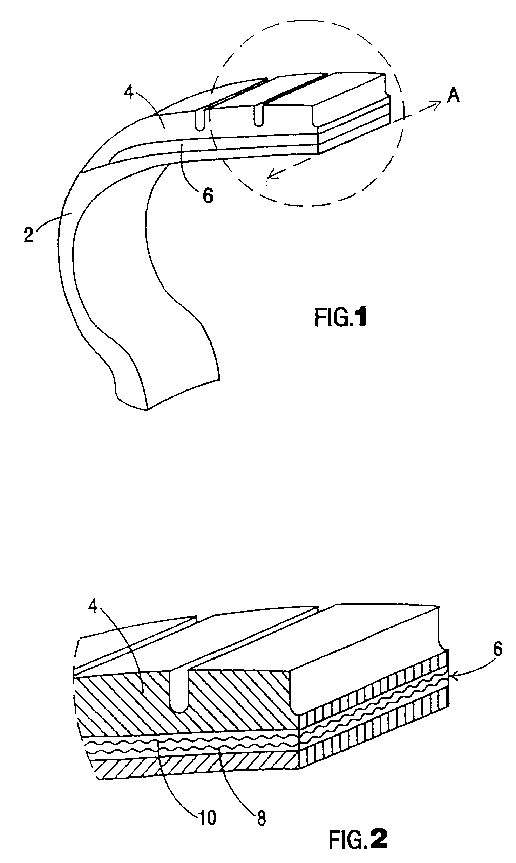

Der vereinfacht dargestellte Reifenausschnitt in Fig. 1 zeigt einen gewölbten Unterbau 2, eine Lauffläche 4 und einen unter der Lauffläche sich in Umfangsrichtung erstreckenden Gürtel 6. Die Umfangsrichtung ist mit der Linie A angedeutet. Sowohl Unterbau, wie auch Gürtel und Lauffläche bestehen aus elastischem Material. Der Gürtel 6 weist in der gezeigten Ausführungsform zwei Gürtellagen 8 und 10 mit gewellten Folien (oder Blechen) als Festigkeitselemente auf, die im vergrößerten Ausschnitt (Fig 2) durch Wellenlinien angedeutet sind.

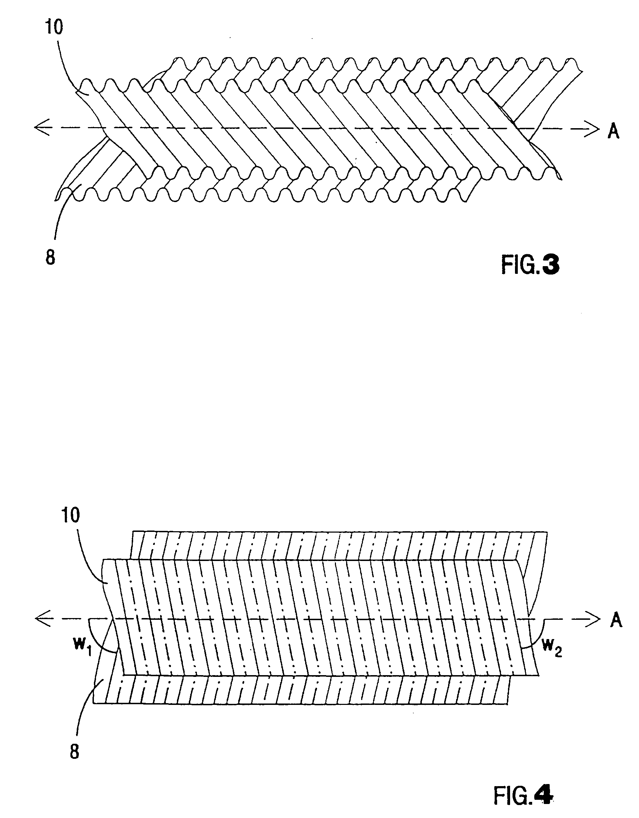

Die beiden Gürtellagen 8 und 10 sind in Fig. 3 perspektivisch und in Fig. 4 in Draufsicht schematisch dargestellt. Die Ausrichtung der Wellung der Folien verläuft in beiden Gürtellagen schräg zur Umfangsrichtung A, und zwar in der unteren Gürtellage 8 im Winkel w₁ und in der oberen Gürtellage 10 im Winkel w₂. Die beiden Winkel können verschieden groß sein. Bevorzugt verlaufen die Wellungen jedoch bezüglich der Umfangsrichtung gegenläufig, das heißt, die Winkel w₁ und w₂ sind gleich groß, aber entgegengesetzt gerichtet. Über die Winkelbeträge lassen sich keine abschließenden Angaben machen, da spezielle Anforderungen an einen Reifen in vielen Fällen durch eine entsprechende spezielle Anordnung der Folien oder Bleche erfüllt werden können. In der Regel bewegen sich die Winkel jedoch im Bereich von 5° bis 45°.

Gemäß der gezeigten Ausführungsform ist die Folie der unteren Gürtellage 8 breiter als diejenige der oberen Gürtellage 10, und die beiden Folien sind so angeordnet, daß sie im Mittel-bereich des Gürtels übereinanderliegen und in den beiden seitlichen Bereichen der Lauffläche nur die eine Folie wirksam ist, womit der Gürtel einen steiferen Innenbereich und flexiblere Seitenbereiche erhält. Eine Ausführungsform mit breiteren Festigkeitselementen in der oberen Gürtellage ist je nach beabsichtigten Eigenschaften des Reifens genauso zweckmäßig, und ebenso eine mit Festigkeitselementen gleicher Breite. Gegebenenfalls lassen sich in entsprechender Weise auch mehr als zwei derartige Gürtellagen im Gürtel anordnen.

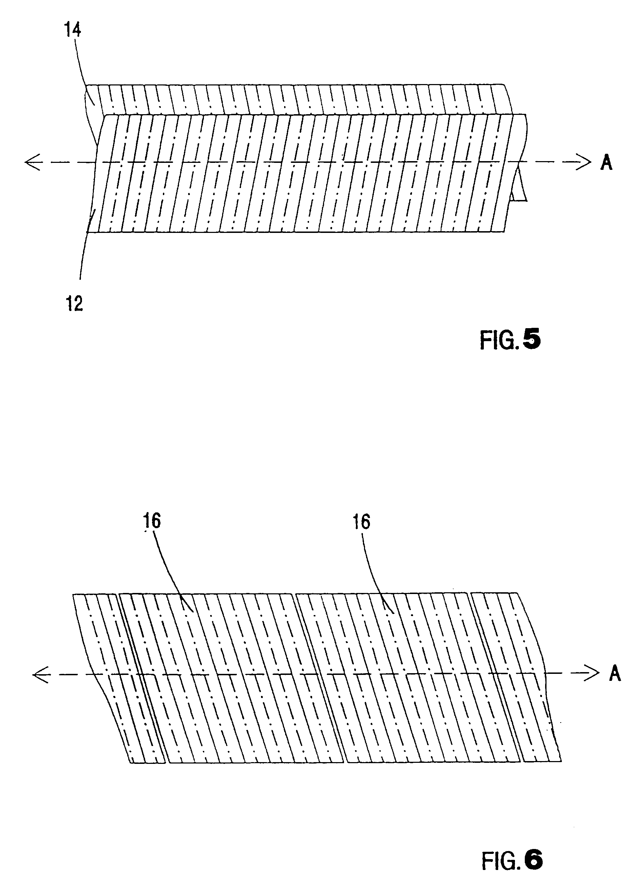

In Fig. 5 ist eine weitere Ausführungsform erfindungsgemäßer Gürtellagen gezeigt, bei der zwei gewellte Folien (oder Bleche) 12 und 14 so gegeneinander versetzt sind, daß sie nur im Mittelbereich des Gürtels übereinanderliegen, und in Fig. 6 ist dargestellt, daß die Folien nicht einstückig gefertigt sein müssen, sondern zweckmäßig aus einer Mehrzahl lamellenförmiger Teile 16 bestehen können, welche aneinanderstoßend oder im Abstand nebeneinander in einer Gürtellage angeordnet sind.

Ergänzend zur einleitenden allgemeinen Darstellung der Erfindung sei hier nochmals erwähnt, daß zur Erzielung der richtungsabhängigen mechanischen Eigenschaften der Folien oder Bleche anstelle der bei den beschriebenen Ausführungsbeispielen verwendeten Wellung beziehungsweise Sickung auch eine strukturelle Anisotropie des Werkstoffs ausgenutzt werden kann. Die Anordnung der Folien oder Bleche erfolgt in diesem Fall sinngemäß so, daß die bevorzugte Richtung höchster Steifigkeit der Ausrichtung der in den Figuren 2 bis 4 gezeigten Erhebungen beziehungsweise Vertiefungen entspricht.

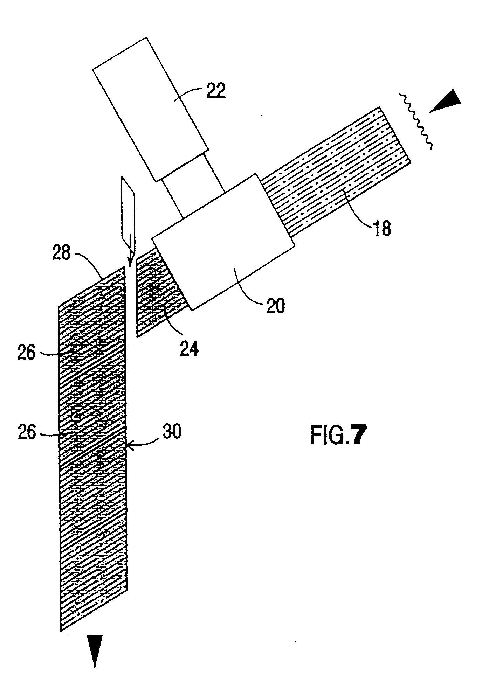

Die Herstellung einer Gürtellage mit eingearbeiteten Festigkeitselementen in Form von Folien oder Blechen, deren Wellung oder Sickung schräg verläuft, kann mit bekannten Verfahren, beispielsweise mittels kalandrierter Folie oder direkt an einem Kalander erfolgen. Als besonders vorteilhaft wird jedoch das in Fig. 7 schematisch dargestellte Verfahren vorgeschlagen. Ein Streifen 18 einer Folie oder eines Blechs wird in einen Querkopf 20 eines Extruders 22 mit in Richtung des Einlaufs in den Querkopf verlaufender Wellung oder Sickung eingeführt und beidseitig beschichtet. Gegebenenfalls kann die Beschichtung seitlich über die Längskanten des Streifens hinausgehen, so daß ein überstehender Rand ohne Folie oder Blech entsteht. Um die Verbindung zwischen Folie oder Blech und Beschichtungsmaterial zu verbessern, ist es möglich, diese zuvor mit einem Bindemittel zu behandeln. Anschließend an die Beschichtung wird der beschichtete Streifen 24 in einem Winkel entsprechend dem vorgesehenen Verlauf der Wellung oder Sickung schräg zur Umfangsrichtung A des Reifens in einzelne Teile 26 geschnitten, die dann an ihren parallel zur Sickung verlaufenden Kanten 28 zu einer Gürtellage 30 zusammengesetzt werden.

Mit diesem Verfahren wird eine direkte Beschichtung einer Folie oder eines Blechs mit schrägverlaufender Sickung umgangen, was eine Reihe Vorteile mit sich bringt. So können als Ausgangsmaterial Streifen mit längsverlaufender Sickung verwendet werden, die einfacher und kostengünstiger herzustellen sind, als Streifen mit schrägverlaufender Sickung. Weiter entstehen beim Einlauf am Querkopf des Extruders weniger Dichtungsprobleme, weil der abzudichtende Querschnitt des Streifens sich während des Einlaufens nicht ändert. Und schließlich kann auf diese Weise die physikalische Struktur des Werkstoffgefüges, beispielsweise die Ausrichtung der atomaren Struktur, besser beherrscht und optimiert werden.

Es sei ausdrücklich erwähnt, daß die dargestellten und beschriebenen Ausführungsformen lediglich Beispiele darstellen, die vom Fachmann im Rahmen des im unabhängigen Patentanspruch definierten Erfindungsgedankens in mannigfaltiger Weise abgewandelt werden können. So wäre es beispielsweise möglich, zusätzlich zur wenigstens einen Gürtellage mit gewellten oder gesickten Folien oder Blechen in weiteren Gürtellagen als Festigkeitselemente Cordfasern zu verwenden. Weiterhin könnte es in gewissen Fällen von Vorteil sein, die Folien oder Bleche mit Ausnehmungen zu versehen, oder sie in mehreren, in Form und Größe unterschiedlichen Teilen anzuordnen.

Ein zusätzlicher Längsgürtel, beispielsweise aus Cordfasern, zur Erhöhung der Längsstabilität wird für Reifen mit erfindungsgemäßem Aufbau im allgemeinen nicht benötigt. Trotzdem sei hier festgehalten, daß ein solcher Längsgürtel ohne weiteres zusätzlich zum beschriebenen Reifenaufbau vorgesehen werden kann, sei es unterhalb, oberhalb oder beidseitig des erfindungsgemäßen Gürtels.

Das Hauptanwendungsgebiet des vorliegend beschriebenen Reifens dürften Straßen- und Nutzfahrzeuge sein. Es wird jedoch nicht ausgeschlossen, daß sich erfindungsgemäße Reifen auch für Schienenfahrzeuge, beispielsweise Untergrundbahnen, Einschienenbahnen (Monorail) usw., einsetzen lassen.

## Patentansprüche

1. Reifen für Fahrzeuge, mit einem Körper aus einem elastischen Material, vorzugsweise aus Kautschuk oder kautschukartigem Material, einem gewölbten Unterbau (2) und einer außenseitigen Lauffläche (4), wobei unter der Lauffäche (4) ein sich ringförmig in Umfangsrichtung erstreckender mehrlagiger Gürtel (6) mit das elastische Material verstärkenden und stabilisierenden Festigkeitselementen im elastischen Material eingebettet sind, **dadurch gekennzeichnet**, daß die Festigkeitselemente in wenigstens zwei der Gürtellagen (8, 10; 12, 14) Folien oder Bleche sind, deren Steifigkeit in einer bevorzugten Richtung schräg zur Umfangsrichtung (A) einen höchsten Wert besitzt, und daß die Folien oder Bleche in der jeweiligen Gürtellage (8; 10; 12; 14) derart angeordnet sind, daß die bevorzugte Richtung in der einen dieser Gürtellagen (8; 10; 12; 14) an der Reifenmittelebene gespiegelt zur bevorzugten Richtung in der anderen dieser Gürtellagen (8; 10; 12; 14) verläuft.

2. Reifen nach Patentanspruch 1, **dadurch gekennzeichnet,** daß die richtungsabhängigen mechanischen Eigenschaften der Folien oder Bleche durch eine Anisotropie beziehungsweise Textur des Werkstoffs erzielt ist.

3. Reifen nach Patentanspruch 1, **dadurch gekennzeichnet,** daß die richtungsabhängigen mechanischen Eigenschaften der Folien oder Bleche durch eine Wellung oder Sickung erzielt ist, deren Erhebungen beziehungsweise Vertiefungen in der bevorzugten Richtung verlaufen.

4. Reifen nach einem der Patentansprüche 1 bis 3, **dadurch gekennzeichnet,** daß der kleinere der beiden durch die bevorzugte Richtung und die Umfangsrichtung gebildeten Supplementwinkel (w₁,w₂) im Bereich von 1 Grad bis 45 Grad liegt.

5. Reifen nach einem der Patentansprüche 1 bis 4, **dadurch gekennzeichnet,** daß die Folien oder Bleche aus einer Mehrzahl lamellenförmiger Teile (16) bestehen, die beabstandet oder aneinanderstoßend oder übereinanderstoßend in der einzelnen Gürtellage (8,10;12,14) angeordnet sind.

6. Reifen nach einem der Patentansprüche 1 bis 5, **dadurch gekennzeichnet,** daß die Festigkeitselemente in allen Gürtellagen Folien oder Bleche sind, deren Steifigkeit in einer bevorzugten Richtung einen höchsten Wert besitzt.

7. Reifen nach einem der Patentansprüche 1 bis 5, **dadurch gekennzeichnet,** daß die Festigkeitselemente in wenigstens einer der weiteren Gürtellagen Cordfäden sind.

8. Reifen nach einem der Patentansprüche 1 bis 7, **dadurch gekennzeichnet,** daß die Folien oder Bleche Ausnehmungen aufweisen.

9. Reifen nach einem der Patentansprüche 1 bis 8, **dadurch gekennzeichnet,** daß die Folien oder Bleche aus Metall bestehen

10. Reifen nach Patentanspruch 9, **dadurch gekennzeichnet,** daß die Folien oder Bleche aus Stahl bestehen.

11. Reifen nach einem der Patentansprüche 1 bis 8, **dadurch gekennzeichnet,** daß die Folien aus Kunststoff bestehen.

12. Verfahren zur Herstellung eines Reifens nach Patentanspruch 1, **dadurch gekennzeichnet,** daß ein Streifen (18) einer Folie oder eines Blechs in einen Querkopf (20) eines Extruders (22) mit in Richtung des Einlaufs in den Querkopf verlaufender Wellung oder Sickung eingeführt und beschichtet wird, wobei die Beschichtung seitlich über die Längskanten des Streifens hinausgehen kann, anschließend der beschichtete Streifen (24) in einem Winkel entsprechend dem vorgesehenen Verlauf der Wellung oder Sickung schräg zur Umfangsrichtung (A) des Reifens in einzelne Teile (26) geschnitten wird, und diese Teile an ihren parallel zur Wellung oder Sickung verlaufenden Kanten (28) lamellenförmig zu einer Gürtellage (16;30) zusammengesetzt werden.

## Claims

1. Tyres for vehicles, with a body consisting of an elastic material, preferably rubber or a rubber-type material, a curved carcass (2) and an external tread (4), whereby a belt (6) extending annularly in circumferential direction and incorporating strength elements which reinforce and stabilise the elastic material is embedded in the elastic material, under the tread (4), **characterised in that** the strength elements in at least two of the belt plies (8, 10; 12, 14) are foils or plates, the rigidity of which possesses a maximum value in a preferred direction transverse to the circumferential direction (A), and that the foils or plates are arranged in such a manner in the respective belt plies (8; 10; 12; 14) that the preferred direction in one of these belt plies (8; 10; 12; 14), mirrored on the centre plane of the tyre, runs to the preferred direction in the other of these belt plies (8; 10; 12; 14).

2. Tyres in accordance with patent claim 1, **characterised in that** the directionally dependent mechanical properties of the foils or plates are attained via anisotropy and/or the texture of the material.

3. Tyres in accordance with patent claim 1, **characterised in that** the directionally dependent mechanical properties of the foils or plates are attained via corrugation or crimping, the elevations and depressions respectively of which run in the preferred directions.

4. Tyres in accordance with one of patent claims 1 to 3, **characterised in that** the smaller of the two supplementary angles (w1, w2) formed by the preferred direction and the circumferential direction is within the range of 1 degree to 45 degrees. within the range of 1 degree to 45 degrees.

5. Tyres in accordance with one of patent claims 1 to 4, **characterised in that** the foils or plates consist of a number of lamellar parts (16), which are arranged in spaced, abutting or overlapping configuration in the respective belt plies (8; 10; 12, 14).

6. Tyres in accordance with one of patent claims 1 to 5, **characterised in that** the strength elements in all belt plies are foils or plates, the rigidity of which possesses a maximum value in a preferred direction.

7. Tyres in accordance with one of patent claims 1 to 5, **characterised in that** the strength elements in at least one of the other belt plies are cord threads.

8. Tyres in accordance with one of patent claims 1 to 7, **characterised in that** the foils or plates possess recesses.

9. Tyres in accordance with one of patent claims 1 to 8, **characterised in that** the foils or plates are made of metal.

10. Tyres in accordance with patent claim 9, **characterised in that** the foils or plates are made of steel.

11. Tyres in accordance with one of patent claims 1 to 8, **characterised in that** the foils are made of plastic.

12. Process for production of a tyre according to claim 1, **characterised in that** a strip (18) of a foil or of a plate is inserted into a crosshead (20) of an extruder (22), with corrugation or crimping running in the direction of insertion into the crosshead, and is coated, whereby the coating may extend laterally beyond the longitudinal edges of the strip, that the coated strip (24) is then cut into individual pieces (26) at an angle corresponding to the intended course of the corrugation or crimping diagonal to the circumferential direction (A) of the tyre, and that these pieces are joined together in lamellar form at their edges (28) running parallel to the corrugation or crimping, to create a belt ply (16; 30).

## Revendications

1. Pneus pour véhicules, avec un corps en matériau élastique, de préférence en caoutchouc ou matériau semblable, une carcasse bombée (2) et une bande d'usure extérieure (4). Une nappe d'armature multicouches (6) se trouvant sous cette bande d'usure (4) et s'étendant en forme d'anneau sur la circonférence et des éléments de résistance renforçant et stabilisant le matériau élastique sont enrobés dans le matériau élastique. Ceci se **caractérisé** par le fait que dans au moins deux des couches de la nappe d'armature (8, 10; 12, 14), les éléments de résistance sont des feuilles ou des tôles dont la rigidité présente une valeur maximale dans un sens préférentiel, en biais par rapport à la circonférence (A) et les feuilles ou tôles sont disposées de telle manière dans la couche de la nappe d'armature (8; 10; 12; 14) que le sens préférentiel dans l'une de ces couches de la nappe d'armature (8; 10; 12; 14) est réfléchi dans le sens préférentiel dans l'autre de ces couches de la nappe d'armature, et ce au niveau du plan médian du pneu.

2. Pneus selon la spécification 1, **caractérisé** par le fait que les propriétés mécaniques des feuilles ou des tôles liées à un sens sont obtenues grâce à une anisotropie, c'est-à-dire une texture du matériau.

3. Pneus selon la spécification 1, **caractérisé** par le fait que les propriétés mécaniques des feuilles ou des tôles liées à un sens sont obtenues grâce à une ondulation ou une moulure dont les bosses ou, respectivement, les creux vont dans le sens préférentiel.

4. Pneus selon l'une des spécifications 1 à 3, **caractérisé** par le fait que le plus petit des deux angles supplémentaires (a₁, a₂), formés par le sens préférentiel et la circonférence, est compris entre 1 et 45 degrés.

5. Pneus selon l'une des spécifications 1 à 4, **caractérisé** par le fait que les feuilles ou tôles sont constituées par plusieurs parties en forme de lamelles (16), celles-ci étant espacées, contigues ou superposées dans une seule couche de la nappe d'armature (8, 10; 12, 14).

6. Pneus selon l'une des spécifications 1 à 5, **caractérisé** par le fait que les éléments de résistance sont des feuilles ou des tôles dans toutes les couches de nappe d'armature et dont la rigidité présente une valeur maximale dans un sens préférentiel.

7. Pneus selon l'une des spécifications 1 à 5, **caractérisé** par le fait que les éléments de résistance sont des cordes dans au moins une des autres couches de nappe d'armature.

8. Pneus selon l'une des spécifications 1 à 7, **caractérisé** par le fait que les feuilles ou les tôles présentent des creux.

9. Pneus selon l'une des spécifications 1 à 8, **caractérisé** par le fait que les feuilles ou les tôles sont en métal.

10. Pneus selon la spécification 9, **caractérisé** par le fait que les feuilles ou les tôles sont en acier.

11. Pneus selon l'une des spécifications 1 à 8, **caractérisé** par le fait que les feuilles sont en matiére plastique.

12. Procédé de fabrication d'un pneu selon la spécification 1, **caractérisé** par le fait qu'une bande (18) de feuille ou de tôle est introduite dans la tête d'équerre (20) d'une extrudeuse (22) - l'ondulation ou la moulure se trouvant dans le sens d'introduction dans la tête d'équerre - puis enduite, l'enduit pouvant recouvrir les bords longitudinaux de la bande, sur les côtés; ensuite, la bande enduite (24), est coupée en plusieurs pièces (26), en biais par rapport à la circonférence (A) du pneu, avec un angle dépendant du cours prévu pour l'ondulation ou la moulure. Ces pièces sont alors assemblées par leurs bords parallèles à l'ondulation ou à la moulure (28), en forme de lamelles, pour constituer une couche de nappe d>armature (16; 30).
